# EUROPEAN PATENT APPLICATION

(11) **EP 3 594 100 A1**
(43) Date of publication of application: **15.01.2020**
(21) Application number: 18183497.9
(22) Date of filing: 13.07.2018
(51) Int. Cl.: B63B 27/00, B65G 7/06

(54) **MATERIAL HANDLING SYSTEM**

(71) Applicant: Lidan Marine AB, 531 18 Lidköping (SE)
(72) Inventor: Pålsson, Mats, 531 53 LIDKÖPING (SE)
(74) Representative: AWA Sweden AB

(57) **Abstract**

The present invention relates to a material handling system (1) for handling heavy loads (91) on a ship, said material handling system comprising
at least two air casters (3) arranged to lift a heavy load off a ground surface,
at least two drive units (2) releasably connectable to said air casters and/or to said heavy load, wherein each one of said drive units comprises
at least one drive means for positioning said heavy load, and
a drive controller arranged to control said at least one drive means,
wherein said material handling system further comprises
at least one user input unit,
an air caster controller arranged to control a lifting force of said air casters,
wherein said drive controllers and said air caster controller are arranged in communication with said at least one user input unit such that said drive means of said drive units and said lifting force of said air casters are controllable from said at least one user input unit.

## Description

### Field of the Invention

The present invention relates to a material handling system for handling heavy loads on a ship.

### Background

On ships, e.g. cruise ships and naval vessels, there is the need to occasionally rearrange material held inside a cargo bay. For cruise ships, this could be due to different types of leisure vehicles such as kayaks, sailboats, and jet skis being moved to and from a launching bay. For naval vessels, this could be due to the fact that some missions require specific equipment not used in other types of missions. Examples of such missions are mine sweeping operations, reconnaissance, and troop transportation. Thus, there is the occasional need to rearrange material held inside a cargo bay.

Ship decks, e.g. the deck of a cargo bay, often consist of relatively flexible sheets of metal provided on top of a number of supporting beams extending across the hull of a ship. Often, determining the number of supporting beams supporting the metal sheet is a tradeoff between stability and weight of the deck. Having more supporting beams means that the deck becomes more stable, and also more resistant to deformation. However, weight is often an important design parameter on naval vessels. This means that it is often challenging to handle heavy loads on ship decks, as the decks are often prone to deformation due to loads from material handling equipment such as trucks and forklifts. Common guidelines dictate that loads of no more than approximately 1 metric tons per wheel of a material handling truck are allowed in ship cargo bays.

Currently available solutions to moving heavy loads on a ship deck involve rail-based solutions, where a load is placed on a movable platform that is connected to a system of rails, overhead cranes, or moving a heavy load by means of a material handling truck over reinforced deck surfaces.

A problem with the currently available solutions is that the flexibility is low, i.e. the heavy loads often need to be moved along predefined paths and placed in predefined positions. Also, having to reinforce the deck of a ship involves an additional step in providing a material handling system, something which is undesirable from an economical and practical perspective.

### Summary of the Invention

An object of the present invention is therefore to alleviate the abovementioned problems and provide a material handling system for handling heavy loads on a ship.

The above and other objects which will be evident from the following description are achieved by a material handling system according to the present invention.

According to a first aspect of the present invention, a material handling system for handling heavy loads on a ship is provided, said material handling system comprising: at least two air casters arranged to lift a heavy load off a ground surface, and at least two drive units releasably connectable to said air casters and/or to said heavy load, wherein each one of said drive units comprises at least one drive means for positioning said heavy load, and a drive controller arranged to control said at least one drive means. Said material handling system further comprises: at least one user input unit, and an air caster controller arranged to control a lifting force of said air casters, wherein said drive controllers and said air caster controller are arranged in communication with said at least one user input unit such that said drive means of said drive units and said lifting force of said air casters are controllable from said at least one user input unit.

Said material handling system may alternatively be referred to as a load handling system, or a container handling system. The material handling system of the present invention allows a user to transport heavy loads, for example containers, over a ground surface such as a deck surface of a ship without deforming the ground surface with indentations from the material that is being handled or from the drive units used to transport the material. Thus, heavier loads may be handled when using the material handling system of the present invention than when using previously available solutions. Heavy loads are to be understood as being loads weighing more than approximately 4 metric tons.

The material handling system of the present invention allows a single operator to safely control a heavy load that is to be handled without requiring the support and assistance of a second operator. This is enabled by the at least two drive units and the at least two air casters communicating with and being controllable by the same user input unit. In other words, a single user may use the user input unit to securely control both the movement of the material across the ground surface, and the lifting force of the air casters. This enables the single user to immediately cut all lifting force from the air casters if a situation would require it. Thereby, an emergency brake for the material handling system is provided in a manner such that it is accessible to the user operating the system. This also reduces the risk of a user accidently being positioned in a dangerous position in relation to the material that is being handled.

An air caster is to be understood as being a pneumatic lifting device used to move heavy loads over flat and substantially non-porous surfaces. An air caster enables substantially friction-free movement over a surface and is therefore beneficial for use with heavy loads. Air casters are well-known to the skilled person and several different configurations of air casters may be used with the present invention.

Said drive controllers and said air caster controller being arranged in communication with said at least one user input unit is to be understood as meaning that said drive controllers and said air caster controller are arranged to communicate, either via wireless or wired communication, with said at least one user input unit.

According to one example embodiment, each one of said air casters comprises a torus-shaped airbag.

According to one example embodiment, each one of said air casters comprises means for pneumatic connection with a supply of pressurized air, such that pressurized air may be supplied to said air casters.

According to one example embodiment, the torus-shaped airbag is arranged to be connected to the supply of pressurized air such that when pressurized air is supplied, said torus-shaped airbag is inflated and creates an airtight seal against the ground surface.

According to one example embodiment, each one of said air casters comprises an air outlet located in the center of said torus-shaped airbag, said air outlet being arranged to be connected with a supply of pressurized air.

According to one example embodiment, said at least two air casters may be at least two air casters, for example four air casters, connected by a joining frame, such that a single lifting unit comprising said at least two air casters is formed.

According to one exemplary embodiment, said air caster controller comprises a controllable valve for controlling a lifting force of said air casters. Said controllable valve may for example be controlled through said user input unit. This enables a user to cut the supply of pressurized air to the air casters from the user input unit, thus removing the lifting force of the air casters. This causes the air casters to fall down to the ground surface, thus preventing any movement over the ground surface due to friction between the air casters and the ground surface. This also enables a user to increase the supply of pressurized air to the air casters, thus increasing the lifting force of the air casters. This may for example be necessary when moving heavy loads over less flat, i.e. uneven, surfaces or surfaces that are semi-porous.

Said drive units being releasably connectable to said air casters is to be understood as meaning that the drive units and/or the air casters comprises connection means for mechanically locking a drive unit to an air caster. Any number of know connection means between the drive units and the air casters may be used. Thus, safe and reliable connection of the two components to each other is achieved. The drive units may be provided with controllable locking means for interfering with a corresponding locking portion of the air casters when the drive units have been connected to the air casters. In other words, the controllable locking means may have a locked state and an unlocked state. The controllable locking means may be arranged to switch from one state to the other based on a detected position of the drive unit relative to the air casters. The drive units and/or the air casters may be provided with a detector for detecting a relative position of the drive units and the air casters, e.g. for use in controlling the controllable locking means.

Said drive units being releasably connectable to said heavy load is to be understood as meaning that the drive units and/or the heavy load comprises connection means for mechanically locking a drive unit to a heavy load. Any number of know connection means between the drive units and the heavy load may be used. Thus, safe and reliable connection of the two components to each other is achieved. This may for example be the heavy load being provided with loops, and the drive units being provided with hooks for connecting to said loops. It may alternatively be that the heavy load is provided with threaded portions for connection with correspondingly threaded portions provided on the drive units. The drive means may alternatively be provided with means for magnetic connection with the heavy load, e.g. an electromagnet controllable from said user input unit.

Said drive means being suitable for positioning said heavy load is to be understood as meaning that said drive unit is arranged to move said heavy load over or across said ground surface. Thus, positional control of the heavy load or material that is being handled may be achieved.

According to one example embodiment, movement of said heavy load by means of said drive means is enabled by the drive units being connected to said air casters and/or to said heavy load.

A user input unit may for example be a control panel having means for controlling a direction of movement of the load that is to be handled, as well as means for controlling a lifting force of the air casters. Said user input unit may be arranged to control each one of said drive units separately and/or be arranged to collectively control said drive units. By being arranged to collectively control said drive units, usability is increased as an operator only needs to input the desired direction and speed of the load that is to be handled, whereby the user input unit translates this input into individual steering and drive signals for each one of the drive units. By being arranged to separately control each one of said drive units, a less complex user input unit is achieved. This decreases the cost of production of the material handling system. According to one exemplary embodiment, the user input unit can switch between controlling said drive units separately and collectively controlling said drive units.

According to one exemplary embodiment, said drive units are independently operable relative each other before being connected to a respective one of said air casters and/or to said heavy load.

According to one exemplary embodiment, said material handling system comprises at least four drive units releasably connectable to said air casters and/or to said heavy load, and wherein said at least one drive means is at least one winch.

According to one exemplary embodiment, said material handling system comprises at least three drive units releasably connectable to said air casters and/or to said heavy load, and wherein said at least one drive means is at least one winch.

According to one exemplary embodiment, said at least three drive units or said at least four drive units may be provided in a respective corner region of a roof of a space in which said heavy load is to be handled. Said space may for example be a cargo bay of a ship. Said corner region of a roof is to be understood as meaning a region in proximity of the intersection point between two adjoining walls and a roof of a space (e.g. a cargo bay). Said corner region of a roof may be provided on the roof surface, or on any one of the two adjoining wall surfaces. In other words, the corner region of a roof of a space includes a region on the walls that is in the proximity of the intersection point between the two adjoining walls and the roof.

Additionally or alternatively, at least one of said drive units may be provided in an intersection region between a wall of the space or cargo bay and a roof of the space or cargo bay. In other words, the drive units may be provided in a corner region of a roof of the space in which the material is to be handled, and/or they may be provided in a side region of a roof of the space in which the material is to be handled.

By providing a material handling system comprising at least three winches or at least four winches, a load may securely be moved across a ground surface by pulling and releasing a respective wire from each one of the at least three winches or the at least four winches. This enables a safer material handling system, in which fewer moving components are provided on ground level. Thus, the risk of a user being run over and hurt by a drive unit is reduced.

According to one exemplary embodiment, said material handling system comprises a plurality of drive units releasably connectable to said air casters and/or to said heavy load, wherein said drive means of at least one of said plurality of drive units is a winch and said drive means of at least another one of said plurality of drive units is a drive wheel, and wherein a vertical position of said at least one drive wheel is adjustable such that a pressure between said at least one drive wheel and said ground surface is adjustable.

According to one exemplary embodiment, said material handling system comprises at least two, or preferably at least three, or most preferably at least four drive units.

According to one exemplary embodiment, the drive means of at least two of said drive units are winches.

According to one exemplary embodiment, the drive means of at least two of said drive units are drive wheel that are adjustable such that a pressure between each one of said drive wheels and said ground surface is adjustable.

According to one exemplary embodiment, said air caster controller is arranged as a separate unit from said drive units and said air casters. Alternatively, an air caster controller may be provided on and/or connected to each one of said drive units.

According to one exemplary embodiment, said material handling system comprises a plurality of air caster controllers. Thus, individual control of each air caster is enabled.

According to one exemplary embodiment, said material handling system comprises one air caster controller for each drive unit of the material handling system.

According to one exemplary embodiment, said at least one drive means is at least one drive wheel, and wherein a vertical position of said at least one drive wheel is adjustable such that a pressure between said at least one drive wheel and said ground surface is adjustable.

Said vertical position of said drive wheel may for example be adjustable by means of a linear actuator, e.g. a hydraulic actuator or a pneumatic actuator. This enables the contact pressure between the drive wheel and the ground surface to be adjusted such that it is sufficiently high to move the load or material that is to be handled, yet sufficiently low to not cause undue marks or indentations in the ground surface. Said linear actuator may for example be a pneumatic actuator connected to the same supply of pressurized air as the air casters. According to one example embodiment, said vertical position of said drive wheel is controllable by means of said user input unit.

According to one example embodiment, said drive units may be moved by means of said respective drive wheel before and after being connected to said air casters. Thus, movement of the drive units inside the space or cargo bay may be simplified by the drive wheels, thus allowing movement of the drive units that does not require undue physical labor. This increases the usability of the material handling system.

According to one example embodiment, said drive unit comprises a motor, such as a hydraulic motor, for controlling the rotation of the drive wheels.

According to one exemplary embodiment, each one of said drive units comprises a plurality of support wheels.

According to one exemplary embodiment, said support wheels are four support wheels. Support wheels are to be understood as meaning wheels that may or may not be actively driven or steered by a motor, the primary function on which is to prevent the drive unit from falling over. The support wheels may for example be provided in a square around the drive wheel, such that the drive wheel is arranged in the middle of the support wheels. Having support wheels allows for a more secure movement of the drive units when not connected to the air casters.

According to one exemplary embodiment, each one of said drive units comprises means for pneumatic connection with a supply of pressurized air and with said air casters, such that pressurized air may be supplied to said air casters through said drive units.

Pneumatic connection of said drive units to said air casters is to be understood as meaning that said drive unit is connectable to a supply of pressurized air, and that said pressurized air may be led through said drive units to said air casters for providing a lifting force. This allows a tube or a hose used for supplying pressurized air to be connected directly to the drive units, thus reducing the risk of the tube or the hose being run over by the drive wheels and/or the support wheels of the drive units.

According to one exemplary embodiment, said air caster controller comprises a controllable valve.

According to one exemplary embodiment, said material handling system comprises one user input unit per drive unit in said material handling system.

According to one exemplary embodiment, each one of said at least one user input units are provided on a respective one of said drive units.

By having a user input unit on each one of the drive units in the material handling system a user is not forced to stand at one and the same drive unit during the entire process of handling the heavy load. This allows for a greater flexibility and a greater usability of the material handling system.

According to one exemplary embodiment, said user input unit is a portable user input unit arranged for wired and/or wireless communication with said drive controllers and said air caster controller. This provides a user with greater flexibility than currently available solutions do, as the user is free to position himself such that a good overview of the situation is achieved. In other words, having a portable user input unit allows a user to move away from the drive units when using the material handling system, thus providing better flexibility in positioning.

Said wireless communication may for example be enabled by means of Bluetooth, WiFi, radio, IR, or other known means for wireless communication.

According to one exemplary embodiment, said user input units have a master state and a slave state, wherein said user input unit in said master state overrides and/or disables the input from said user input unit in said slave state.

According to one exemplary embodiment, each one of said user input units may be switched from being in said slave state to being in said master state. According to one exemplary embodiment, said user input unit comprises means for switching states, allowing a user to determine which user input unit should be in said master state.

It should be understood that only one user input unit may be in said master state at any given time. This means that once a user input unit is switched from slave state to master state, the user input unit that was previously in the master state is changed to being in a slave state. The material handling system may be provided with means for controlling which user input units may be switched to a master state.

This allows for a material handling system where a second user may be involved as a failsafe, if anything should happen to the first user while operating the material handling system. Having two points of control, with switchable priority between the two, allows for a more secure material handling system.

According to one exemplary embodiment, each one of said drive units is releasably connectable to each one of said air casters and/or to said heavy load in at least two different positions.

Being releasably connectable to each one of said air casters and/or to said heavy load in at least two different positions is to be understood as meaning that the air casters and/or the heavy load has multiple connection points to which the drive units may be connected. This allows for flexibility in connecting the drive units to the air casters and/or to the heavy load, such that it becomes easier to place the heavy load that is to be handled in locations such as corners of a cargo bay, or between two other loads that have already been placed and between which there is limited space.

According to one exemplary embodiment, said air casters have a substantially rectangular shape, and wherein each one of said drive units are releasably connectable to at least two different sides of each one of said air casters.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1a is a perspective view of a material handling system according to one exemplary embodiment of the present invention,
Figure 1b is a top view of the material handling system of Figure 1a,
Figure 2a is a perspective view of a material handling system according to one exemplary embodiment of the present invention,
Figure 2b is a top view of the material handling system of Figure 2a,
Figure 3a is a perspective view of a material handling system according to one exemplary embodiment of the present invention,
Figure 3b is a top view of the material handling system of Figure 3a,
Figure 4a and 4b are cross-sectional views of the drive unit of at least two exemplary embodiments of the present invention,
Figures 5a and 5b are perspective views of two air casters joined by an air caster frame.

### Detailed description of the drawings

In the present detailed description, embodiments of a material handling system according to the present invention are mainly discussed with reference to drawings showing a material handling system with components and portions being relevant in relation to various embodiments of the invention. It should be noted that this by no means limits the scope of the invention, which is also applicable in other circumstances for instance with other types or variants of material handling systems than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

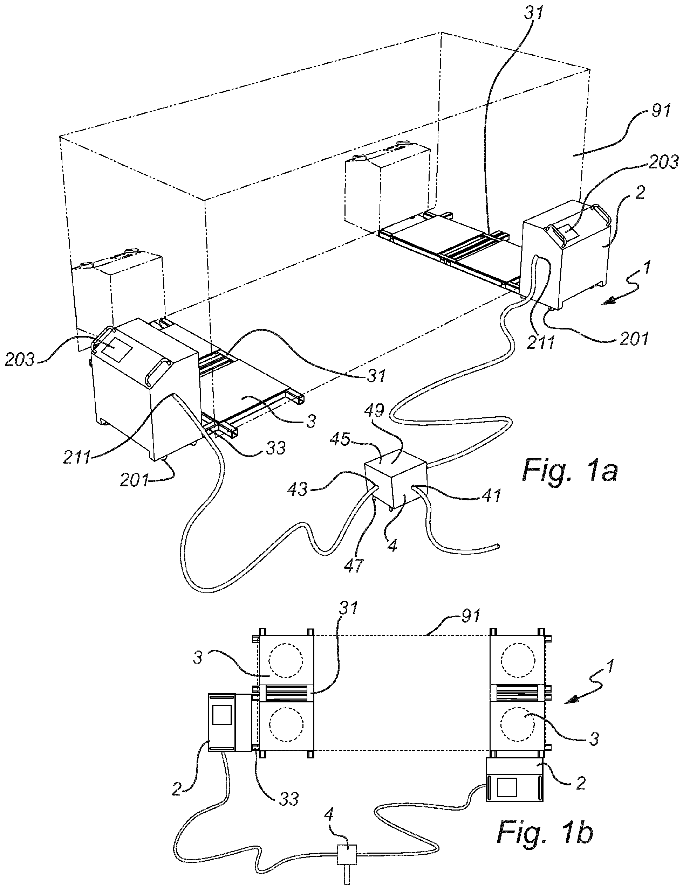

Figure 1a is a perspective view of a material handling system 1 according to one exemplary embodiment of the present invention. Also shown in Fig. 1a is the outline of a container, which serves to act as an example of a heavy load 91 that is to be handled by the material handling system 1. The material handling system 1 comprises four air casters 3 and two drive units 2, each of which will be described below.

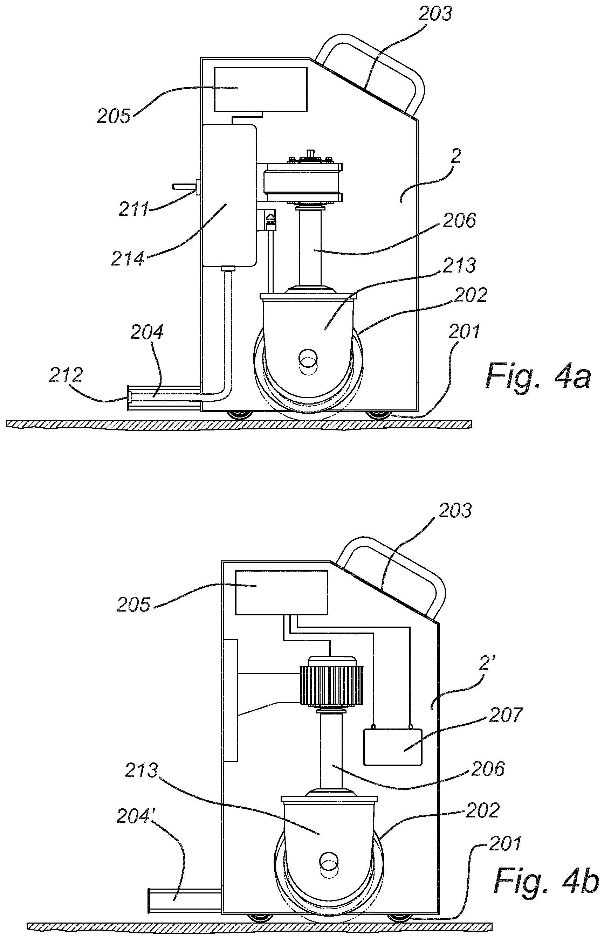

The drive units 2 of at least this embodiment of the present invention are also shown in Figure 4a. The two drive units 2 are substantially identical, each comprising four support wheels 201, one drive wheel 202 arranged between the four support wheels 201, an interface 203 for communicating information and/or for receiving inputs from a user, and means 204 for pneumatically connecting the drive unit 2 to any one of the air casters 3, so that air may be supplied to the air casters 3 via the drive units 2. Each one of the drive units 2 also comprises a drive controller 205, which is a control unit arranged to communicate with the user input unit 5 and translate signals therefrom into actuation of the drive wheel 202 of the drive unit 2. Furthermore, each one of said drive units comprises a linear actuator 206 connected to the drive wheel 202, such that the drive wheel 202 may be moved in a vertical direction between an upper position and a lower position. In the upper position, the drive wheel 202 has little or no contact with the ground. In the lower position, the contact pressure between the drive wheel 202 and the ground is larger than when the drive wheel 202 is in the upper position. This allows a user to control the pressure between the drive wheel 202 and the ground. The linear actuator 206 is powered by a supply of pressurized air, which will be explained in greater detail in relation to Fig. 4a.

As seen in Fig. 1a, the drive units 2 may be connected to the air casters 3 in a number of different positions. Examples of such positions are shown by a dotted outline of a drive unit 2 placed in various positions around the air casters 3 and the heavy load 91 that is to be handled. The drive units 2 may for example be connected to each short end of the heavy load 91 that is to be handled, as is shown in Fig. 1a. Alternatively, one or both of the drive units 2 may be connected to the long end of the heavy load 91, as is illustrated by the dotted outlines.

The air casters 3 are pneumatic lifting devices used to move the heavy load 91 over flat and substantially non-porous surfaces. The air casters 3 of the material handling system 1 of at least this embodiment are connected to each other two-and-two, so that two pairs of air casters 3 are formed. The connection between the two respective air casters 3 is enabled by an air caster frame 31, or a joining frame, to which each air caster 3 is connected. The air caster frame 31 comprises an air inlet 33, and means for pneumatically connecting one air caster 3 to the other, so that pressurized air supplied to one air caster 3 via said air inlet 33 of the air caster frame 31 may be fed to the other air caster 3 as well. Also shown in Fig. 1a is an air caster controller 4 comprising an inlet 41 for receiving pressurized air from an external supply, and two outlets 43 for feeding the pressurized air to each one of the two drive units 2. The air caster controller 4 has a box-shaped housing 45 and four wheels 47 that allow it to move across the surface over which the heavy load 91 is to be moved. The air caster controller 4 comprises a controllable valve 49 for controlling the amount of pressurized air fed to the drive units 2. The controllable valve 49 is configured to be controlled by means of a user input unit 5, as described below. In this embodiment, the external supply of pressurized air connects to a respective inlet 208 on each one of the two drive units 2, each of which comprises means 204 for pneumatic connection with the air casters 3, thus allowing pressurized air to be supplied to the air casters 3 via the drive units 2.

Figure 1b is a top view of the material handling system 1, illustrating the embodiment of Figure 1a from another perspective.

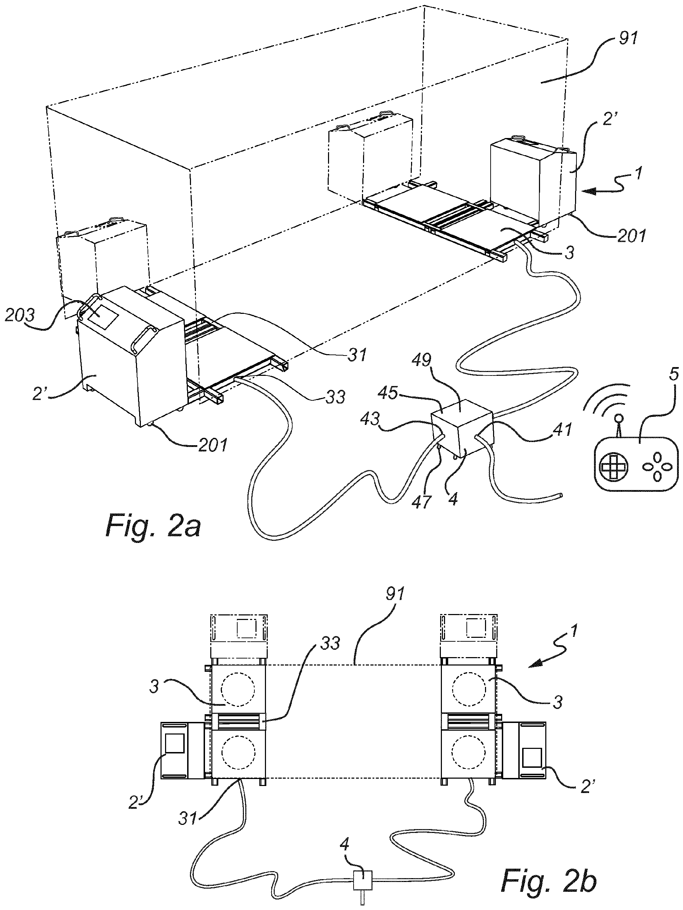

Figure 2a is a perspective view of a material handling system 1' according to one exemplary embodiment of the present invention. Also shown in Fig. 2a is an air caster controller 4 comprising an inlet 41 for receiving pressurized air from an external supply, and two outlets 43 for feeding the pressurized air to each one of said pair of air casters 3. In this embodiment, the external supply of pressurized air connects to the air casters 3 via said air caster controller 4, thereby enabling a user to control a lifting force of the air casters 3 by means of controlling the air caster controller 4 through the user input unit 5.

The drive units 2' of at least this embodiment of the present invention are also shown in Figure 4b. The two drive units 2' are substantially identical, each comprising four support wheels 201, one drive wheel 202 arranged between the four support wheels 201, an interface 203 for communicating information and/or for receiving inputs from a user, and means 204' for connecting the drive unit 2' to any one of the air casters 3. Each one of the drive units 2' also comprises a drive controller 205, which is a control unit that is arranged to communicate with the user input unit 5 and translate signals therefrom into actuation of the drive wheel 202 of the drive unit 2'. Furthermore, each one of said drive units 2' comprises a linear actuator 206 connected to the drive wheel 202, such that the drive wheel 202 may be moved in a vertical direction between an upper position and a lower position. In the upper position, the drive wheel 202 has little or no contact with the ground. In the lower position, the contact pressure between the drive wheel 202 and the ground is larger than when the drive wheel 202 is in the upper position. This allows a user to control the pressure between the drive wheel 202 and the ground. The linear actuator 206 is powered by a battery 207, which will be described in greater detail in relation to Fig. 4b. The linear actuator 206 may alternatively be powered by an external supply of electricity.

For the sake of brevity, features that are shared between this embodiment and the one described in relation to Fig. 1a-b have been omitted from the description. The skilled person readily understands how to transfer features and teachings between these two embodiments.

Figure 2b is a top view of the material handling system 1', illustrating the embodiment of Figure 2a from another perspective.

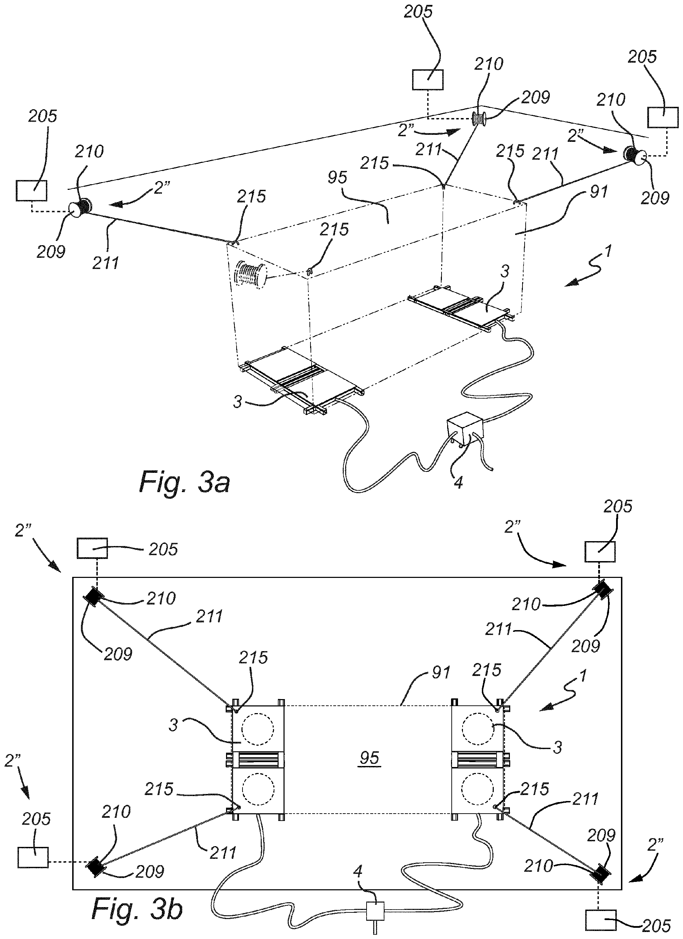

Figure 3a is a perspective view of a material handling system 1" according to one exemplary embodiment of the present invention. In this embodiment, there are four drive units 2", each of which comprises a winch 209 connected to a respective corner region 93 of a room in which the heavy load 91 is to be handled. The winches 209 each comprises a rolling body 210, which is connected to a drive controller 205 configured to control the rotation of the rolling bodies 210. Each one of the winches 209 further comprises a respective wire 211, one end of which is rolled up on said rolling body 210 and the other end of which is connected to a top region 95 of the heavy load 91 that is to be handled. The connection between the wire 211 and the heavy load 91 is achieved by means of commonly available connection means, such as a loop provided on the heavy load 91 and a hook connected to the wire 211. Other means for connecting the wire 211 to the heavy load 91 are readily available to the skilled person. The air casters 3 of this embodiment are substantially identical to those described in relation to Figs. 1a and 1b, and will therefore not be described in any further detail here. Figure 3b is a top view of the material handling system 1", illustrating the embodiment of Figure 3a from another perspective.

Figures 4a and 4b are cross-sectional views of drive units 2, 2' of at least two exemplary embodiments of the present invention. The drive unit 2 of Fig. 4a comprises a drive controller 205, a linear actuator 206, an air inlet 211, an air outlet 212, means 204 for pneumatically connecting the drive unit to an air caster 3, and a drive wheel 202 that is connected to both the linear actuator 206 and a motor 213. The linear actuator 206 is a pneumatic actuator driven by a supply of pressurized air provided to the drive unit 2 through the air inlet 211. Between the air inlet 211 and the linear actuator 206, and in fluid connection with both, is a controllable valve 214 configured to control the amount of air supplied to the linear actuator 206, thus controlling the vertical position of the drive wheel 202 and the pressure between the drive wheel 202 and the ground. The drive wheel 202 is shown in an upper position in Fig. 4a, and a lower position is indicated by a dotted line. In some embodiments of the present invention, the controllable valve 214 acts as an air caster controller, and thereby replaces the externally located air caster controller 4 described in relation to Fig. 1 above.

The controllable valve 214 is controlled by the user input unit 5, through communication with the drive controller 205, so as to allow a user to control the friction between the drive wheel 202 and the ground from the user input unit 5. Furthermore, pneumatically connecting the drive unit 2 to an air caster 3 involves connecting the air outlet 212 of the drive unit 2 to an air inlet 33 on the air caster 3, so that pressurized air may be fed to the air casters 3 through the drive units 2. The amount of pressurized air fed to the air casters 3 through the drive units 2 may be controlled by the controllable valve 214.

The drive units 2' of Fig. 4b is identical to that described in relation to Fig. 4a, with the exception that this drive unit 2' comprises a battery 207, that it does not comprise an air inlet, and that the linear actuator 206 controlling the vertical position of the drive wheel 202 is driven by the battery 207 and not by a supply of pressurized air. Similarly, the means 204' for connecting the drive unit 2' to the air casters 3 does not comprise means for putting the two in pneumatic connection. Also other embodiments than those shown in Figs. 4a and 4b are considered, such as a drive unit comprising a battery and a battery-driven linear actuator, an air caster controller, as well as an air inlet and means for pneumatically connecting the drive unit to the air caster.

Both the drive unit 2 of Fig. 4a and the drive unit 2' of Fig. 4b comprises a motor 213 for driving the drive wheel 202. This motor 213 is connected to and controlled by the drive controller 205, which in turn is in communication with the user input unit 5. The motor may for example be driven by a battery, such as the one describe in relation to Fig. 4b above, or by an external source of electricity. The drive units 2, 2' also comprise support wheels 201 located on a lower side of the drive units 2, 2' for balancing them.

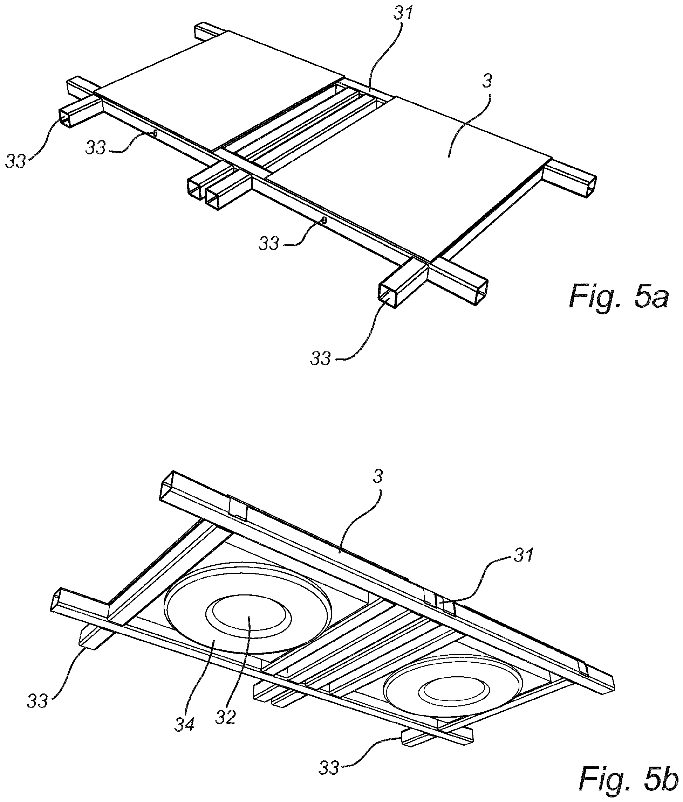

Figures 5a and 5b are perspective views of two air casters 3 joined by an air caster frame 31. Each one of the air casters 3 comprises a torus-shaped airbag 34. The torus-shaped airbag 34 is connected to the supply of pressurized air such that when pressurized air is supplied, the torus-shaped airbag 34 is inflated and creates an airtight seal against the ground surface. Each one of the air casters 3 further comprises an air outlet 32 located in the center of the torus-shaped airbag 34. The air outlet 32 is arranged to be connected to a supply of pressurized air.

The skilled person readily understands how an air caster 3 works, and no further description will therefore be given here.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. Furthermore, any reference signs in the claims should not be construed as limiting the scope.

## Claims

1. A material handling system for handling heavy loads on a ship, said material handling system comprising
at least two air casters arranged to lift a heavy load off a ground surface,
at least two drive units releasably connectable to said air casters and/or to said heavy load, wherein each one of said drive units comprises
at least one drive means for positioning said heavy load, and
a drive controller arranged to control said at least one drive means,
wherein said material handling system further comprises
at least one user input unit,
an air caster controller arranged to control a lifting force of said air casters,
wherein said drive controllers and said air caster controller are arranged in communication with said at least one user input unit such that said drive means of said drive units and said lifting force of said air casters are controllable from said at least one user input unit.

2. A material handling system according to claim 1, wherein said material handling system comprises at least four drive units releasably connectable to said air casters and/or to said heavy load, and wherein said at least one drive means is at least one winch.

3. A material handling system according to claim 1, wherein said at least one drive means is at least one drive wheel, and wherein a vertical position of said at least one drive wheel is adjustable such that a pressure between said at least one drive wheel and said ground surface is adjustable.

4. A material handling system according to claim 3, wherein each one of said drive units comprises a plurality of support wheels.

5. A material handling system according to any one of claims 3-4, wherein each one of said drive units comprises means for pneumatic connection with a supply of pressurized air and with said air casters, such that pressurized air may be supplied to said air casters through said drive units.

6. A material handling system according to any one of the preceding claims, wherein said air caster controller comprises a controllable valve.

7. A material handling system according to any one of the preceding claims, wherein said material handling system comprises one user input unit per drive unit in said material handling system.

8. A material handling system according to any one of the preceding claims, wherein each one of said at least one user input units are provided on a respective one of said drive units.

9. A material handling system according to claim 7, wherein each one of said user input units have a master state and a slave state, wherein input from a user input unit in said master state overrides and/or disables input from a user input unit in said slave state.

10. A material handling system according to any one of the preceding claims, wherein each one of said drive units is releasably connectable to each one of said air casters and/or to said heavy load in at least two different positions.

11. A material handling system according to any one of the preceding claims, wherein said air casters have a substantially rectangular shape, and wherein each one of said drive units are releasably connectable to at least two different sides of each one of said air casters.
